# EUROPEAN PATENT SPECIFICATION

(11) **EP 2 339 719 B1**
(45) Date of publication and mention of the grant of the patent: **30.03.2016**
(21) Application number: 10015990.4
(22) Date of filing: 22.12.2010
(51) Int. Cl.: H02K 1/27

(54) **Permanent magnet type rotating electric machine**
Rotierende elektrische Permanentmagnetmaschine
Machine rotative électrique à aimants permanents

(30) Priority: 24.12.2009 JP 2009291702
(43) Date of publication of application: 29.06.2011
(73) Proprietor: Hitachi, Ltd., Chiyoda-ku Tokyo 100-8280 (JP)
(72) Inventor: Nagashima, Hideaki, Chiyoda-ku Tokyo 100-8220 (JP); Ishizawa, Shuichi, Chiyoda-ku Tokyo 100-8220 (JP); Kori, Daisuke, Chiyoda-ku Tokyo 100-8220 (JP); Hori, Masahiro, Chiyoda-ku Tokyo 100-8220 (JP); Fujieda, Masayasu, Chiyoda-ku Tokyo 100-8220 (JP)
(74) Representative: Strehl Schübel-Hopf & Partner

(56) References cited:
- EP-B1- 0 505 498
- JP-A- 2000 341 891
- JP-A- 2002 101 585
- JP-A- 2004 104 962
- JP-A- 2009 201 300

## Description

### FIELD OF THE INVENTION:

The present invention relates to a permanent magnet type rotating electric machine and more particularly to a permanent magnet type rotating electric machine suitable for the type having a permanent magnet in a rotor core.

### BACKGROUND OF THE INVENTION

With regard to permanent magnet type rotating electric machines, as described in TOSHIBA REVIEW Vol.55 No.9 (2000) and ELECTRIC MACHINES 2007.6, p.12-14, there is known, for example, a surface magnet type rotating electric machine having a rotor structure in which plural magnets are attached to an outer periphery of a rotor core formed by laminating silicon steel plates in an axial direction of the rotor core, and a interior permanent magnet type rotating electric machine in which slots are formed near an outer periphery of a rotor core so as to be extended in the axial direction of the rotor core and permanent magnets are inserted into the slots respectively.

In the former, since an induced voltage increases in proportion to the rotational speed, it has a disadvantage in that a maximum rotational speed must be limited to a certain rotational speed at which the induced voltage does not exceed a power supply voltage. On the other hand, the latter does not have such a disadvantage.

One drawback of the permanent magnet is that it is a fragile material in point of strength. In addition, each insertion slot for the permanent magnet in the rotor core since is formed by axially aligning holes formed by respectively punching silicon steel plates to be laminated, asperities trend to present on the slot in the axial direction due to tolerances of holes.

Therefore, the insertion of a permanent magnet may become impossible due to a large frictional force induced at the time of insertion of the magnet caused by the asperities due to the tolerances of holes. To avoid this inconvenience, a large slot relative to the shape of a magnet is formed, thereby causing a clearance to be formed between the magnet and the slot.

Accordingly, it is desired to surely fix the fragile material such as a permanent magnet into the rotor core without permitting movement of the magnet through the slot due to the clearance during operation not to cause cracking of the magnet and without deteriorating magnetic characteristics.

For fixing the permanent magnet to the rotor, an adhesive is used mainly in small-sized rotating electric machines which are not so strictly required to satisfy high strength and high reliability. However, the adhesive has a disadvantage in that the adhesive force thereof deteriorates due to, for example, aged deterioration. In the case of an induction motor having rotor bars inserted into slots of a rotor core and an end ring attached to front ends of the rotor bars, a natural frequency of torsional vibration induced by those rotor bars and end ring is likely to be lowered. As a method for preventing such a lowering of the natural frequency, JP 2000-341891A shows a technique of adopting a structure in which the rotor bars are constantly pressed against a side where the rotor bars are pressed with a rotary force of the rotor during rotation thereof.

With regard to a conventional interior permanent magnet type rotating electric machine as shown in Fig. 10, JP-A 2009-22089 shows a technique for making small the spacing between outer periphery portions of permanent magnets 3 and stator magnetic poles while keeping balance between magnetic characteristics and strength for bearing a centrifugal force. Moreover, for improving magnetic characteristics,
JP 2002-101585A and H9 (1997) -84283A show such a technique as shown in Fig. 11 in which both ends of outer periphery portions of permanent magnets 3 are exposed from a rotor core 2 and the permanent magnets 3 are fixed by a non-magnetic sleeve.

As described above, each slot for insertion therein of a permanent magnet of the rotor is formed by axially aligned holes formed by respectively punching silicon steel plates to be laminated, asperities may present on the slot in the axial direction due to tolerances on holes. Due to the asperities caused by the tolerances, therefore, it is likely that a frictional force induced at the time of inserting the permanent magnet into the slot will become large, making it impossible to effect the insertion of the magnet. To avoid this inconvenience, a large slot (holes) relative to the shape of a magnet is formed, thus causing a clearance to be formed between the magnet and the slot. In this case, however, since the permanent magnet is a fragile material in point of strength, the presence of a clearance between the magnet and the magnet insertion slot is likely to cause cracking due to vibration or the like. Other conventional rotary electric machines are disclosed in JP 2009 201300 A and JP 2004 104962 A.

The present invention has been accomplished in view of the above-mentioned point and it is an object of the invention to provide a permanent magnet type rotating electric machine in which a permanent magnet, though fragile in point of strength, does not move through a slot of a rotor core under, for example, vibration during operation and is hence not cracked by vibration or the like.

### SUMMARY OF THE INVENTION

In order to achieve the above-mentioned obj ect, a permanent magnet type rotating electric machine of the present invention is characterized as defined in claim 1.

According to the present invention, it is possible to provide a permanent magnet type rotating electric machine which is able to easily insert a permanent magnet into a slot because of the slot outwardly broadening in the radial direction of the rotor core, and prevent rattling of.the permanent magnet within the slot even if the permanent magnet is formed of a fragile material in point of strength.

### BRIEF DESCRIPTION OF THE DRAWINGS

Fig. 1 is a partial sectional view of a rotor core in a permanent magnet type rotating electric machine according to a first example useful to understand the present invention;
Fig. 2 is a partial sectional view of a rotor core in a permanent magnet type rotating electric machine according to a second example useful to understand the present invention;
Fig. 3 is a partial sectional view of a rotor core in a permanent magnet type rotating electric machine according to an embodiment of the present invention;
Fig. 4 is a partial sectional view of a rotor core in a permanent magnet type rotating electric machine according to a third example useful to understand the present invention;
Fig. 5 is a partial sectional view of a rotor core in a permanent magnet type rotating electric machine according to a fourth example useful to understand the present invention;
Fig. 6 is a partial sectional view of a rotor core in a permanent magnet type rotating electric machine according to a fifth example useful to understand the present invention;
Fig. 7 is a partial enlarged sectional view of Fig. 6;
Fig. 8 is a partial sectional view of a rotor core in a permanent magnet type rotating electric machine according to a sixth example useful to understand the present invention;
Fig. 9 is a partial sectional view of a rotor core in a permanent magnet type rotating electric machine according to a seventh example useful to understand the present invention;

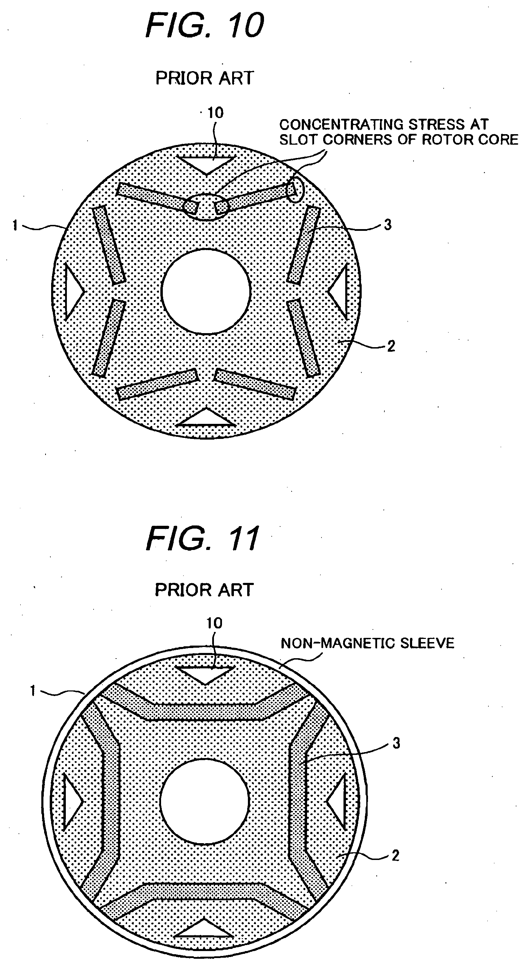

Fig. 10 is a sectional view showing a rotor structure in a conventional permanent magnet type rotating electric machine;
Fig. 11 is a sectional view showing a rotor structure in another conventional permanent magnet type rotating electric machine; and
Fig. 12 is a partial sectional view showing a rotor core in a conventional permanent magnet type rotating electric machine.

### DETAILED DESCRIPTION OF THE PREFERRED EMBODIMENTS

An embodiment and examples useful to understand the present invention will be described below with reference to the drawings.

### [First Example]

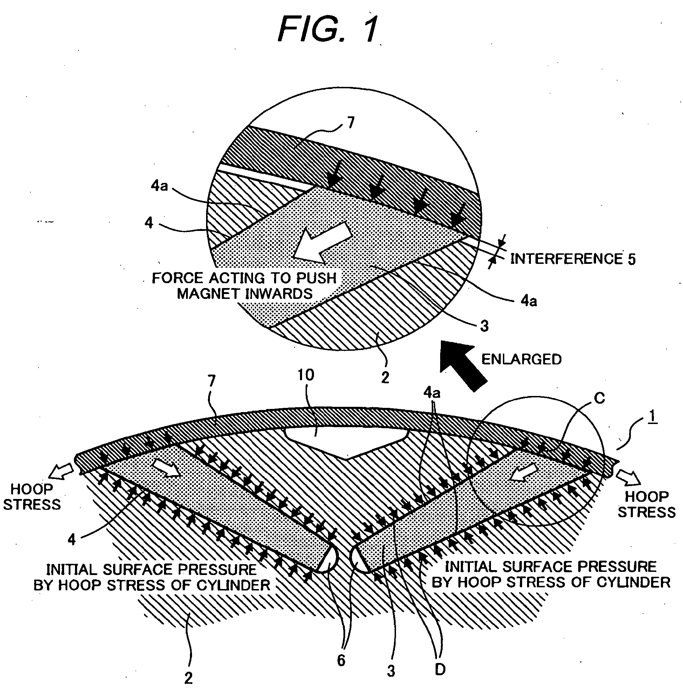

Fig. 1 shows a rotor for explaining a permanent magnet type rotating electric machine according to a first example useful to understand the present invention.

The permanent magnet type rotating electric machine of this example shown in Fig. 1 comprises a rotor 1 and a stator (not shown) opposed to each other keeping a predetermined clearance therebetween. The rotor 1 is comprised of a rotor core 2 formed by silicon steel plates laminated in an axial direction of the rotor core, slots 4 being formed near an outer periphery of the rotor core 2 in the rotor core so as to be open at the outer periphery of the rotor core 2, permanent magnets 3 being inserted into the slots 4 respectively, and a non-magnetic sleeve 7 covering the outer periphery of the rotor core 2. The non-magnetic sleeve 7 is fitted by shrink fit or forced fit. Each of cavities 10 is disposed between adjacent slots 4 near the outer periphery of the rotor core 2 to generate reluctance torque.

In this example, each of the slots 4 being open at the outer periphery surface of the rotor core 2 has inclined side faces 4a (which are inclined with respect to a vertical center line of the slot 4) outwardly broadening (e.g. fanning out) the slot 4 in the radial direction of the rotor core 2. Each of the permanent magnets 3 has a wedge-shaped form and is fixed into the slot 4 with a force C applied from the sleeve 7 (the force C directing toward a center of the rotor core 2) and an pressure applied from the inclined side faces 4a of the slot 4 as shown in black arrows D in Fig. 1, for example by adopting an interference fit or a tight fit.

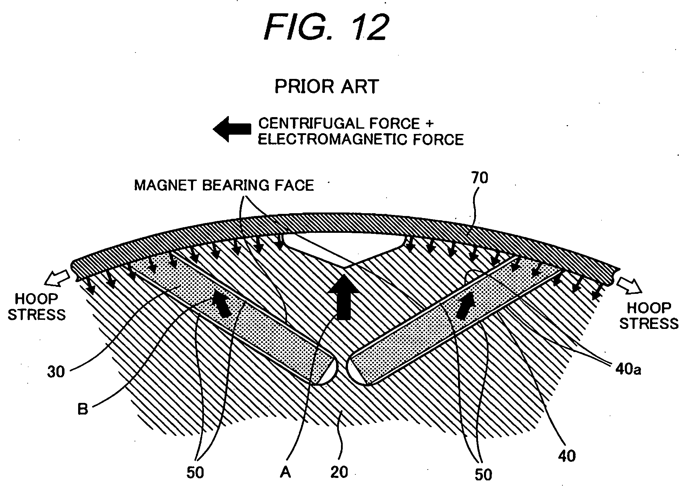

In comparison with the present example, a conventional permanent magnet type rotating electric machine as shown in Fig. 12 has parallel side faces 40a of each slot 40 and parallel both faces of each permanent magnet 30 inserted into the slot 40. While the rotor 1 is rotating, as indicated with black arrows A in Fig. 12, a resultant force of both a centrifugal force of the rotor 1 and an electromagnetic force generated by stator (not shown) is applied to the rotor core 20 and each permanent magnet 30. In the case of Fig. 12, a clearance 50 since presents between the slot 40 and the permanent magnet 30, the permanent magnet 3 moves in the direction of black arrows B and thereby is borne by both an inner surface of a non-magnetic sleeve 70 and an upper side (magnet bearing face) of the side faces 40a of the slot 40.

On the other hand, in the case of the present example of Fig. 1, an interference 5 is provided at an outer periphery end of each permanent magnet 3, and the permanent magnet 3 is applied with a force pressing the permanent magnet 3 into the slot 4 by working of both the interference 5 and a hoop stress of the sleeve 7. Then an initial surface pressure for fixing the permanent magnet 3 is applied to the permanent magnet 3 by the force C pressing the magnet 3 into the slot 4 and a force (stress) D applied to the wedge-shaped permanent magnet 3 from the inclined side faces 4a of the slot 4.

Thus, since the permanent magnet 3 is surely borne with the initial surface applied thereto, no clearance is formed between the permanent magnet 3 and the slot 4 and there is no fear of the permanent magnet 3 moving through the slot 4 to develop a crack even under vibration of the rotor 1 while being able to easily inserting the permanent magnet 3 into the slot4 by a provisional insertion in advance of the interference fit or tight fit with the non-magnetic sleeve 7.

### [Second Example]

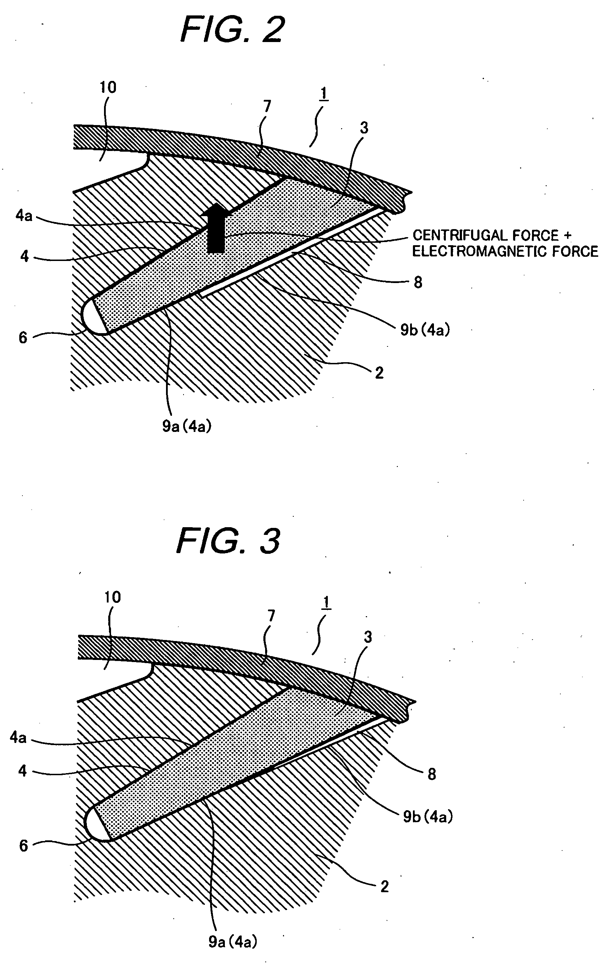

Fig. 2 is a partial sectional view of a rotor core in a permanent magnet type rotating electric machine according to a second example useful to understand the present invention.

As shown in Fig. 2, the rotor 1 of this example also comprises a rotor core 2 with slots 4 each having inclined side faces 4a outwardly broadening the slot 4 in the radial direction of the rotor core 2, permanent magnets 3 each having a wedge-shaped form, and a non-magnetic sleeve 7 similarly with the first example. In this example, the technical matters different from the first example is as follows.

As described above already, each insertion slot 4 for the permanent magnet 3 is formed by axially aligning holes formed by respectively punching silicon steel plates to be laminated, asperities may present on the slot in the axial direction. Even at a small tolerance, therefore, a frictional force developed upon insertion of the permanent magnet becomes large, the insertion of a permanent magnet may become impossible due to a large frictional force induced at the time of insertion of the magnet. To avoid this inconvenience, in the conventional art, a large slot (aligned holes) relative to the shape of the permanent magnet is formed, thereby causing a clearance between the permanent magnet and the slot.

In the example of Fig. 2, in addition to slots 4 each having inclined side faces 4a outwardly broadening the slot 4 in the radial direction of the rotor core 2 and permanent magnets 3 each having a wedge-shaped form, the following technical matters are proposed. That is, in the inclined side faces 4a of the slot 4, one inclined side face, which is opposite to another inclined side face subjected to a pressure of the permanent magnet 3 with a resultant force of both a centrifugal force of the rotor 1 and an electromagnetic force generated by stator (not shown), is provided with a first side face part 9a tightly fitting to a part of the permanent magnet 3 so as to press the magnet 3 against the first side face part 9a and a second side face part 9b as a cut face with a step height 8 increasing the clearance between the second side face part 9a and the permanent magnet 3 so as to be greater than the manufacturing tolerance. The second side face part (cut face) 9b is formed over a range from an opening side of the slot 4 (an outer periphery-side of the rotor) to at least approximately middle deep point of the slot 4 on the one inclined side face 4a to easily insert the permanent magnet 3 into the slot 4. The face 9a is formed near a slot's bottom side opposite to the opening side of the slot 4 on the one inclined side face 4a.

With this configuration, in addition to the effect obtained by the configuration of the first example, there is obtained an effect that the permanent magnet 3 can be still further easily inserted into the slot 4 by decreasing a frictional force induced at the time of inserting the permanent magnet into the slot.

### [Embodiment]

Fig. 3 is a partial sectional view of a rotor core in a permanent magnet type rotating electric machine according to an embodiment of the present invention.

As shown in Fig. 3, the rotor 1 of this embodiment also comprises a rotor core 2 with slots 4 each having inclined side faces 4a outwardly broadening the slot 4 in the radial direction of the rotor core 2, permanent magnets 3 each having a wedge-shaped form, and a non-magnetic sleeve 7 similarly with the first and second examples. Furthermore, as with the second example, in the inclined side faces 4a of the slot 4 of this embodiment, one inclined side face, which is opposite to another inclined side face subjected to a pressure of the permanent magnet 3 with a resultant force of both a centrifugal force of the rotor 1 and an electromagnetic force generated by the stator (not shown), is provided with a first side face part 9a tightly fitting to a part of the permanent magnet 3 so as to press the magnet 3 against the side face part 9a. On the other hand, a second side face part 9b of the present embodiment is different from that of the second example in form. That is, the second side face part 9b of the present embodiment is inclined so as to gradually increase a clearance 8 between the inclined side face 4a (the second side face part 9b) and the permanent magnet 3 toward an outer periphery-side of the rotor. The second side face part 9b is formed over a range from an opening side of the slot 4 (an outer periphery-side of the rotor) to at least approximately middle deep point of the slot 4 on the one inclined side face 4a to easily insert the permanent magnet 3 into the slot 4.
In the embodiment shown in Fig. 3, such a configuration can obtain the same effect as that of the second example.

### [Third Example]

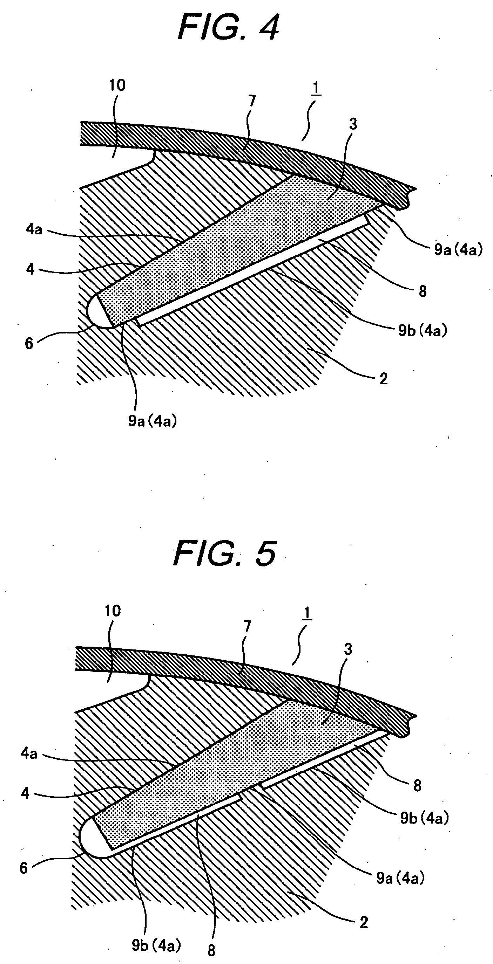

Fig. 4 is a partial sectional view of a rotor core in a permanent magnet type rotating electric machine according to a third example useful to understand the present invention.

In the example shown in Fig. 4, the rotor 1 of this example also comprises a rotor core 2 with slots 4 each having inclined side faces 4a outwardly broadening the slot 4 in the radial direction of the rotor core 2, permanent magnets 3 each having a wedge-shaped form, and a non-magnetic sleeve 7 similarly with the first and second examples. Furthermore, as with the second example, in the inclined side faces 4a of the slot 4 of this example, one inclined side face, which is opposite to another inclined side face subjected to a pressure of the permanent magnet 3 with a resultant force of both a centrifugal force of the rotor 1 and an electromagnetic force generated by the stator (not shown), is provided with a first side face part 9a tightly fitting to a part of the permanent magnet 3 so as to press the magnet 3 against the side face part 9a. On the other hand, a second side face part 9b as a cut face with a step height increasing the clearance 8 between the inclined side face 4a and the permanent magnet 3 so as to be greater than the manufacturing tolerance. However the first side face part 9a and second side face part 9b of the present example is different from that of the second example in form. That is, the first side face part 9a is separated into two parts which are disposed both ends side in a deep direction of the slot 4, namely into the opening side and the bottom side in the slot 4. On the other hand, the second side face part 9b is disposed between the two parts of the first side face part 9a. In the example shown in Fig. 4, such a configuration can obtain the same effect as that of the second example.

### (Fourth Example)

Fig. 5 is a partial sectional view of a rotor core in a permanent magnet type rotating electric machine according to a fourth example useful to understand the present invention.

In the example shown in Fig. 5, the rotor 1 of this example also comprises a rotor core 2 with slots 4 each having inclined side faces 4a outwardly broadening the slot 4 in the radial direction of the rotor core 2, permanent magnets 3 each having a wedge-shaped form, and a non-magnetic sleeve 7 similarly with the first and second examples. Furthermore, as with the second example, in the inclined side faces 4a of the slot 4 of the present example, one inclined side face, which is opposite to another inclined side face subjected to a pressure of the permanent magnet 3 with a resultant force of both a centrifugal force of the rotor 1 and an electromagnetic force generated by the stator (not shown), is provided with a first side face part 9a tightly fitting to a part of the permanent magnet 3 so as to press the magnet 3 against the side face part 9a. On the other hand, a second side face part 9b as a cut face with a step height increasing the clearance 8 between the inclined side face 4a and the permanent magnet 3 so as to be greater than the manufacturing tolerance. However the first side face part 9a and second side face part 9b of the present example is different from that of the second example in form. That is, the first side face part 9a is disposed at a middle point on the one side face 4a and the second side face 9b is separated into two parts which are disposed both sides with respect to the first side face part 9a (middle point)in a deep direction of the slot 4. In the example shown in Fig. 5, such a configuration can also obtain the same effect as that of the second example.

### [Fifth Example]

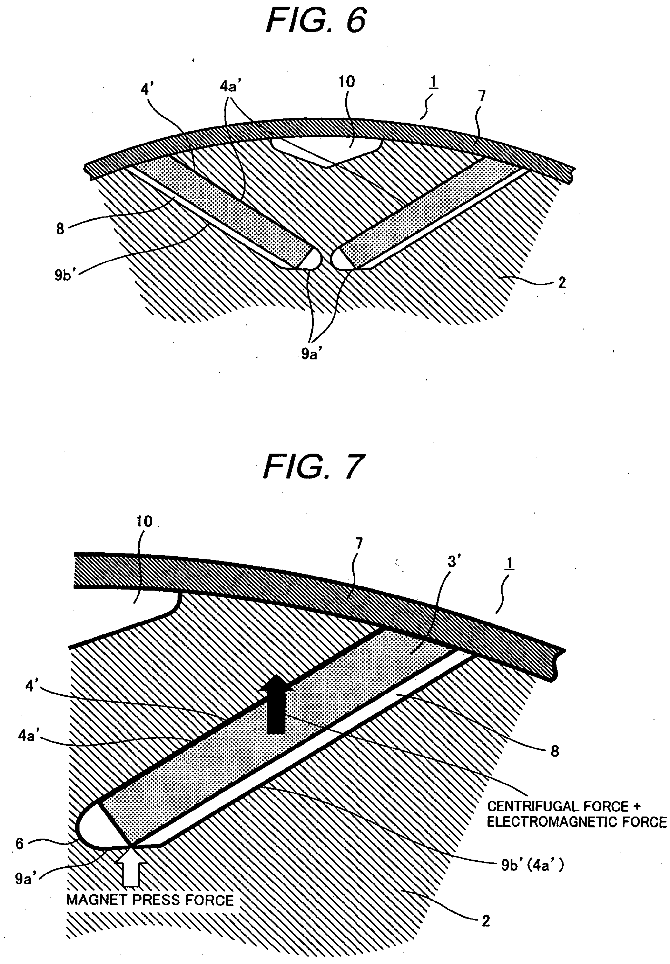

Fig. 6 is a partial sectional view of a rotor core in a permanent magnet type rotating electric machine according to a fifth example useful to understand the present invention and Fig. 7 is a partial enlarged view of Fig. 6.

The present example's features different from the above-mentioned other examples and the embodiment are as follows. The present example has parallel (opposed) side faces 4a' of each slot 4' in place of outwardly broadening inclined side faces 4a of the slot 4 described in the embodiment and the first to fourth examples, and has parallel both faces of each non wedge-shaped permanent magnet 3' inserted into the slot 4'. In the parallel side faces 4a' of the slot 4' of the present example, one parallel side face (indicated by numeral 9b'), which is opposite to another parallel side face subjected to a pressure of the permanent magnet 3' with a resultant force of both a centrifugal force of the rotor 1 and an electromagnetic force generated by the stator (not shown), is provided with a cut face 9b' increasing a clearance between the one parallel side face 4a' and the permanent magnet 3' so as to be greater than the manufacturing tolerance. The one side face 4a' as the cut face 9b' is shorter than another side face 4a', and an inclined side face 9a'is provided between the cut face 9b' and the bottom of the slot 4'.

In the case of the permanent magnet 3' not having an inclination like a wedge, the inclined side face 9a' near a slot' s one end portion (at bottom side and the rotor core center side) is also located on the side opposite to another inclined side face 4a' subjected to the pressure of the permanent magnet 3' with the resultant force of both the centrifugal force of the rotor 1 and the electromagnetic force.

According to such a configuration, the permanent magnet 3' is applied with a force pressing the permanent magnet 3' into the slot 4 by the sleeve 7, and thereby one corner of the permanent magnet 3' is pressed against the inclined side face 9a'. Therefore, the permanent magnet 3' is surely fixed by the force pressing the magnet 3' into the slot 4' by the sleeve7, the force (stress) applied to the permanent magnet 3' from the inclined side faces 9a', and the force pressing the permanent magnet 3' against the another side face 4a' with the resultant force of both the centrifugal force of the rotor 1 and the electromagnetic force.

With this configuration, even when adopting the slot 4' having non broadening side faces (parallel side faces) 4a' with the cut face 9b' and non wedge-shaped permanent magnet 3' , it is possible to surely bear the permanent magnets 3' in the slot 4' during ration of the rotor 3' and of course, it is possible to obtained the effect that the permanent magnet 3' can be still further easily inserted into the slot 4' by decreasing a frictional force induced at the time of inserting the permanent magnet into the slot.

### [Sixth Example]

Fig. is a partial sectional view of a rotor core in a permanent magnet type rotating electric machine according to a sixth example useful to understand the present invention.

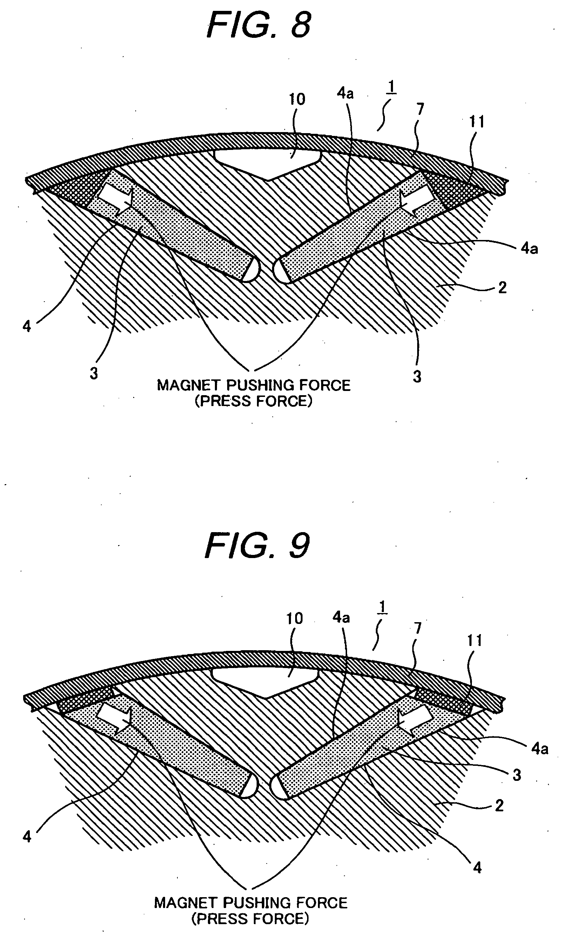

As shown in Fig. 8, the rotor 1 of this example also comprises a rotor core 2 with slots 4 each having inclined side faces 4a outwardly broadening the slot 4 in the radial direction of the rotor core 2, permanent magnets 3 each having a wedge-shaped form, and a non-magnetic sleeve 7 similarly with the first example. In this example, the technical matters different from the first example is as follows.

In the present example, an elastic member 11 is inserted between the sleeve 7 and a slot open-side end portion of each permanent magnet 3 thereby to allow the elastic member 11 to keep a force pressing the permanent magnet 3 toward the rotor core center side of each slot 4'.

With this configuration, in addition to the effect obtained by the configuration of the first example, the following effect is obtained. That is, even if the interference effect at the slot-open side end portion of the permanent magnet 3 is gone due to a thermal deformation difference such as a thermal expansion difference, the permanent magnet 3 can be surely held with a reaction force of the elastic member 11. In addition, since the elastic member 11 is interposed between the slot open-side end portion of the permanent magnet 3 and the sleeve 7, it can be not necessary to machine the slot open-side end portion of the permanent magnet in conformity with the outer periphery of the rotor and the sleeve 7.

Fig. 9 is a partial sectional view of a rotor core in a permanent magnet type rotating electric machine according to a seventh example useful to understand the present invention.

This example is a modified example of the sixth example and the technical matter different from the sixth example is as follows. In the present example, a slot-side end portion of a permanent magnet 3 is cut by a predetermined thickness with respect to the outer periphery of a rotor and an elastic member 11 having a predetermined uniform thickness is inserted into the thus-cut space namely between the slot open-side end portion of the permanent magnet 3 and the sleeve 7.

With this configuration, a uniform surface pressure can be applied to the slot-side end portion of the permanent magnet 3.

## Claims

1. A permanent magnet type rotating electric machine comprising:
a rotor (1) and a stator opposed to each other keeping a predetermined clearance therebetween, and
the rotor (1) having a rotor core (2) formed by silicon steel plates being laminated in an axial direction of the rotor core (2), slots (4) being formed near an outer periphery of the rotor core (2) in the rotor core (2) so as to be open at the outer periphery of the rotor core (2), permanent magnets (3) being inserted into the slots (4) respectively, and a non-magnetic sleeve (7) covering the outer periphery of the rotor core (2),
wherein each of the permanent magnets (3) is fixed into the slot (4) with a force (C) applied from the sleeve (7), the force (C) directing toward a center of the rotor core (2), and a pressure (D) applied from inclined side faces (4a) of the slot (4),
**characterised in that**
the inclined side faces (4a) of each of the slots (4) are outwardly broadening the slot (4) in a radial direction of the rotor core (2), and each of the permanent magnets (3) has a wedge-shaped form fitting to the slot (4), so that it is possible to easily insert the permanent magnets (3) into the slots (4) and prevent rattling of the permanent magnets (3) within the slots (4),
an initial surface pressure for fixing the permanent magnet (3) is applied to the permanent magnet (3) by the force (C) pressing the magnet (3) into the slot (4) and the pressure (D) applied to the wedge-shaped permanent magnet (3) from the inclined side faces (4a) of the slot (4), and
in the inclined side faces (4a) of the slot (4), one inclined side face, which is opposite to another inclined side face subjected to a pressure of the permanent magnet (3) with a resultant force of both a centrifugal force of the rotor (1) and an electromagnetic force generated by the stator, is provided with a first side face part (9a) tightly fitting to a part of the permanent magnet (3) so as to press the permanent magnet (3) against the first side face part (9a) and a second side face part (9b) inclined so as to gradually increase a clearance (8) between the second side face part (9b) and the permanent magnet (3) toward an outer periphery-side of the rotor (1).

2. The permanent magnet type rotating electric machine according to claim 1, wherein an elastic member (11) is inserted between the sleeve (7) and the slot open-side end portion of the permanent magnet (3).

## Patentansprüche

1. Rotierende elektrische Maschine vom Permanentmagnettyp mit
einem Rotor (1) und einem Stator, die entgegengesetzt zueinander unter Einhaltung eines vorbestimmten Abstandes angeordnet sind, und
wobei der Rotor (1) einen Rotorkern (2) aufweist, der durch Siliciumstahlplatten gebildet ist, die in einer axialen Richtung des Rotorkerns (2) geschichtet sind, wobei Schlitze (4) nahe eines Außenumfangs des Rotorkerns (2) in dem Rotorkern (2) so gebildet sind, dass sie an dem Außenumfang des Rotorkerns (2) offen sind, wobei in die Schlitze (4) jeweils Permanentmagnete (3) eingeschoben sind, und wobei eine nicht magnetische Manschette (7) den Außenumfang des Rotorkerns (2) abdeckt,
wobei jeder der Permanentmagnete (3) in dem Schlitz (4) mit einer von der Manschette (7) ausgeübten Kraft (C), wobei die Kraft (C) zu einer Mitte des Rotorkerns (2) hin gerichtet ist, und mit einem von geneigten Seitenflächen (4a) des Schlitzes (4) ausgeübten Druck (D) fixiert ist,
**dadurch gekennzeichnet, dass**
die geneigten Seitenflächen (4a) von jedem der Schlitze (4) den Schlitz (4) in einer radialen Richtung des Rotorkerns (2) nach außen verbreitern, und jeder der Permanentmagnete (3) eine in den Schlitz (4) passende Keilform aufweist, so dass es möglich ist, die Permanentmagnete (3) leicht in die Schlitze (4) einzuschieben und ein Klappern der Permanentmagnete (3) innerhalb der Schlitze (4) zu verhindern,
ein ursprünglicher Oberflächendruck zum Fixieren der Permanentmagnete (3) durch die Kraft (C), die die Magnete (3) in den Schlitz (4) presst, und den Druck (D), der durch die geneigten Seitenflächen (4a) des Schlitzes (4) auf die keilförmigen Permanentmagnete (3) ausgeübt wird, auf den Permanentmagnet (3) ausgeübt wird, und
in den geneigten Seitenflächen (4a) des Schlitzes (4) eine geneigte Seitenfläche, die entgegengesetzt zu einer anderen geneigten Seitenfläche steht, die einem Druck des Permanentmagneten (3) mit einer resultierenden Kraft aus sowohl einer Zentrifugalkraft des Rotors (1) als auch einer durch den Stator erzeugten elektromagnetischen Kraft ausgesetzt ist, mit einem ersten Seitenflächenabschnitt (9a) versehen ist, der genau in einen Abschnitt des Permanentmagneten (3) passt, um den Permanentmagneten (3) gegen den ersten Seitenflächenabschnitt (9a) zu pressen, sowie mit einem zweiten Seitenflächenabschnitt (9b), der so geneigt ist, dass er graduell einen Abstand (8) zwischen dem zweiten Seitenflächenabschnitt (9b) und dem Permanentmagneten (3) in Richtung einer Außenumfangsseite des Rotors (1) vergrößert.

2. Rotierende elektrische Maschine vom Permanentmagnettyp nach Anspruch 1, wobei ein elastisches Element (11) zwischen der Manschette (7) und dem Endabschnitt des Permanentmagneten (3) am offenen Ende des Schlitzes eingeschoben ist.

## Revendications

1. Machine électrique rotative de type à aimants permanents comportant :
un rotor (1) et un stator opposés l'un par rapport à l'autre en maintenant un espace prédéterminé entre ceux-ci, et
le rotor (1) comportant un noyau de rotor (2) formé par des plaques d'acier au silicium laminées dans une direction axiale du noyau de rotor (2), des encoches (4) étant formées près d'une périphérie extérieure du noyau de rotor (2) dans le noyau de rotor (2) de manière à être ouvertes sur la périphérie extérieure du noyau de rotor (2), des aimants permanents (3) étant respectivement insérés dans les encoches (4), et un manchon amagnétique (7) recouvrant la périphérie extérieure du noyau de rotor (2),
dans laquelle chacun des aimants permanents (3) est fixé dans l'encoche (4) avec une force (C) appliquée à partir du manchon (7) et une pression (D) appliquée à partir de faces latérales inclinées (4a) de l'encoche (4), la force (C) étant dirigée vers un centre du noyau de rotor (2),
**caractérisée en ce que**
les faces latérales inclinées (4a) de chacune des encoches (4) élargissent l'encoche (4) vers l'extérieur dans une direction radiale du noyau de rotor (2), et chacun des aimants permanents (3) a une forme de coin s'adaptant à l'encoche (4), de sorte qu'il est possible d'insérer facilement les aimants permanents (3) dans les encoches (4) et d'empêcher un déplacement des aimants permanents (3) à l'intérieur des encoches (4),
une pression superficielle initiale destinée à fixer l'aimant permanent (3) est appliquée à l'aimant permanent (3) par la force (C) pressant l'aimant (3) dans l'encoche (4) et par la pression (D) appliquée à l'aimant permanent en forme de coin (3) à partir des faces latérales inclinées (4a) de l'encoche (4), et
dans les faces latérales inclinées (4a) de l'encoche (4), une première face latérale inclinée, qui est opposée à une autre face latérale inclinée soumise à une pression de l'aimant permanent (3) avec une force résultant à la fois d'une force centrifuge du rotor (1) et d'une force électromagnétique générée par le stator, est pourvue d'une première partie de face latérale (9a) s'adaptant étroitement à une partie de l'aimant permanent (3) de manière à presser l'aimant permanent (3) contre la première partie de face latérale (9a), et d'une seconde partie de face latérale (9b) inclinée de manière à augmenter progressivement un espace (8) entre la seconde partie de face latérale (9b) et l'aimant permanent (3) vers un côté de périphérie extérieure du rotor (1).

2. Machine électrique rotative de type à aimants permanents selon la revendication 1, dans laquelle un organe élastique (11) est inséré entre le manchon (7) et la portion d'extrémité côté ouvert de l'encoche de l'aimant permanent (3).
